# EUROPÄISCHE PATENTSCHRIFT

(11) **EP 2 838 753 B1**
(45) Veröffentlichungstag und Bekanntmachung des Hinweises auf die Patenterteilung: **10.06.2020**
(21) Anmeldenummer: 12734878.7
(22) Anmeldetag: 03.07.2012
(51) Int. Cl.: B60L 53/38, B60L 53/36

(54) **ELEKTROFAHRZEUG, INDUKTIVE LADESTATION UND VERFAHREN**
ELECTRIC VEHICLE, INDUCTIVE CHARGING STATION, AND METHOD
VÉHICULE ÉLECTRIQUE, STATION DE CHARGEMENT PAR INDUCTION, ET PROCÉDÉ

(43) Veröffentlichungstag der Anmeldung: 25.02.2015
(73) Patentinhaber: Siemens Aktiengesellschaft, 80333 München (DE)
(72) Erfinder: FEHLING, Marcus, 81739 München (DE)
(86) Internationale Anmeldenummer: PCT/EP2012/062906
(87) Internationale Veröffentlichungsnummer: WO 2014/005621

(56) Entgegenhaltungen:
- WO-A1-2014/023651
- WO-A2-2010/060720
- WO-A2-2014/023595
- DE-A1-102009 042 627
- DE-A1-102011 116 321
- US-A1- 2012 091 959

## Beschreibung

Die Erfindung betrifft ein Elektrofahrzeug, eine induktive Ladestation und ein Verfahren zur Positionierung eines Elektrofahrzeugs auf einer induktiven Ladestation.

Eine Aufladung von Elektrofahrzeugen an einer Ladestation erfolgt derzeit üblicherweise unter Verwendung eines Ladekabels.

Aus der Druckschrift DE 10 2009 042 627A1 ist ein Verfahren zum Orten von verfügbaren Ladestationen für ein Elektrofahrzeug bekannt, wobei eine Positionsanfrage von dem Fahrzeug gesendet wird, eine Ladestation in Reaktion darauf Positionsdaten zu dem Fahrzeug sendet und die Ladestation daraufhin im Fahrzeug angezeigt wird. Eine Navigation zu der Ladestation kann auf Grundlage der vom Fahrzeug empfangenen Positionsdaten erfolgen.

Eine weitere bekannte Möglichkeit, Elektrofahrzeug zu laden, bieten induktive Ladestationen. Hierbei befindet sich sowohl z.B. an der Unterseite des Elektrofahrzeugs als auch in der bodenseitigen Ladestation ein Spulensystem. Über ein magnetisches Wechselfeld, das dieses Spulensystem durchdringt, wird Energie von der Ladestation zum Fahrzeug induktiv übertragen.

Ein induktiver Ladevorgang kann nach einer Positionierung des Elektrofahrzeugs auf der Ladestation durchgeführt werden, ohne dass hierzu ein Aussteigen des Fahrzeugführers oder eine Verbindung mit einem Ladekabel erforderlich ist.

Um ein elektrisches Fahrzeug induktiv mit so wenig Verlust und Streustrahlung zu laden, ist es notwendig, das Spulensystem der Ladestation und das Spulensystem des Elektrofahrzeugs möglichst exakt überlappend zu positionieren.

Diese exakte Positionierung erweist sich indes als problematisch. Zum einen ist das Spulensystem der Ladestation üblicherweise unterhalb eines Fahrbahnbelags eingebracht, so dass dessen genaue Lage für den Fahrzeugführer ohne weitere Maßnahmen nicht ersichtlich ist. Weiterhin ist auch die genaue Lage des Spulensystems im eigenen Elektrofahrzeug für den Fahrzeugführer nicht intuitiv erkennbar. Diese Umstände machen eine exakte Positionierung des Elektrofahrzeugs auf der Ladestation nahezu unmöglich, zumal eine Positionierung in idealer Weise auch bei fehlenden Positionierungshilfen, wie Markierungen oder dergleichen, möglich sein soll.

Aus der Druckschrift DE 10 2011 116321A1 ist ein Verfahren zur Positionierung eines Elektrofahrzeugs über einer induktiven Ladestation bekannt, bei dem von zwei am Fahrzeug angebrachten Antennen Signale einer Ladestation empfangen werden. Mittels Triangulation wird aus den Spannungswerten der Signale eine Richtung zu der Ladestation berechnet.

Die Druckschrift US 2012/091 959 A1 betrifft ein Fahrzeugleitsystem, bei dem mittels einer Sensoranordnung am Fahrzeug ein von einer Ladestation ausgesandtes Signal empfangen wird. Die Laufzeitdifferenz dieses Signal zu den verschiedenen Sensoren des Fahrzeugs wird verwendet, um mittels Triangulation einen Vektor zur Ladestation zu bestimmen.

Die Druckschrift WO 2010/060 720 A2 zeigt ein Verfahren zum automatischen Laden eines Elektrofahrzeugs, bei dem das Fahrzeug selbstgesteuert, entsprechend den Vorgaben eines Leitsystems, einen ausgewählten Ladeort ansteuert und nach Abschluss des Ladevorgangs selbstgesteuert in einen Übernahmebereich zurück verfährt, sowie ein entsprechendes Fahrzeug und Ladeassistenzsystem.
Aufgabe der Erfindung ist es daher, eine Anordnung und Verfahren zur Positionierung eines Elektrofahrzeugs auf einer vorzugsweise bodenseitig angeordneten induktiven Ladestation anzugeben, welche eine möglichst exakte Positionierung eines Elektrofahrzeugs gewährleistet, ohne hierzu eine besondere Geschicklichkeit des Fahrzeugführers oder eine Hinzuziehung von Bodenmarkierungen erforderlich zu machen.

Diese Aufgabe wird erfindungsgemäß durch ein Elektrofahrzeug mit den Mitteln des Patentanspruchs 1 gelöst. Die Aufgabe wird ferner erfindungsgemäß durch eine induktive Ladestation mit den Mitteln des Patentanspruchs 5 gelöst. Die erfindungsgemäße Lösung sowohl durch ein Elektrofahrzeug mit den Mitteln des Patentanspruchs 1 und durch eine induktive Ladestation mit den Mitteln des Patentanspruchs 5 ist durch einen gemeinsamen Erfindungsgedanken getragen, welcher eine erfindungsgemäße Lösung der Aufgabe mit den Verfahren zur Positionierung eines Elektrofahrzeugs auf einer induktiven Ladestation gemäß Patentanspruch 10 vorsieht.

Das zur Positionierung auf einer induktiven Ladestation eingerichtete erfindungsgemäße Elektrofahrzeug umfasst eine erste Transpondereinheit zum Senden einer drahtlosen Anfragenachricht und zum Empfang einer die Anfragenachricht beantwortenden durch eine der Ladestation zugeordneten zweite Transpondereinheit gesendeten drahtlosen Antwortnachricht; eine Navigationseinheit zur Übernahme von in der Antwortnachricht enthaltenen Positionsdaten der induktiven Ladestation sowie eine Bestimmungseinheit zur Bestimmung einer Trajektorie zur Positionierung des Elektrofahrzeugs auf der induktiven Ladestation. Die Positionsbestimmung erfolgt durch Vergleich der Positionsdaten der induktiven Ladestation mit einer durch die Navigationseinheit ermittelten aktuellen Position des Elektrofahrzeugs. Die Positionsbestimmung erfolgt zusätzlich durch Ermittlung einer Laufzeitdifferenz der Antwortnachricht zwischen der ersten Transpondereinheit und der zweiten Transpondereinheit, wobei in mindestens der zweiten Transpondereinheit wenigstens zwei in einem vorgegebenen Abstand angeordnete Transponder vorgesehen sind.

Die zur Positionierung eines Elektrofahrzeugs eingerichtete erfindungsgemäße induktive Ladestation umfasst eine zweite Transpondereinheit zum Empfang einer drahtlosen Anfragenachricht und zum mindestens einmaligen Senden einer die Anfragenachricht beantwortenden Antwortnachricht an eine dem Elektrofahrzeug zugeordnete erste Transpondereinheit sowie eine Steuereinheit zur Erstellung der Antwortnachricht, wobei die Antwortnachricht Positionsdaten der induktiven Ladestation umfasst. Zur Ladestation-externen Bestimmung einer Laufzeitdifferenz der Antwortnachricht zwischen der Ladestation-externen ersten Transpondereinheit und der zweiten Transpondereinheit sind in der zweiten Transpondereinheit wenigstens zwei in einem vorgegebenen Abstand angeordnete Transponder vorgesehen.

Das erfindungsgemäße Verfahren zur Positionierung eines Elektrofahrzeugs auf einer induktiven Ladestation sieht ein Senden einer drahtlosen Anfragenachricht durch eine dem Elektrofahrzeug zugeordnete erste Transpondereinheit vor. Anschließend erfolgt ein Empfang der Anfragenachricht durch eine der induktiven Ladestation zugeordnete zweite Transpondereinheit. Daran anschließend wird eine die Anfragenachricht beantwortende drahtlose Antwortnachricht durch eine der induktiven Ladestation zugeordnete Steuereinheit erstellt. Die Antwortnachricht enthält Positionsdaten der induktiven Ladestation. Darauf wird die Antwortnachricht durch die zweite Transpondereinheit mindestens einmal gesendet. Auf Seiten des Elektrofahrzeugs erfolgt ein Empfang der Antwortnachricht durch die erste Transpondereinheit und eine Übergabe der darin enthaltenen Positionsdaten an eine dem Elektrofahrzeug zugeordnete Navigationseinheit. Schließlich wird eine Trajektorie zur Positionierung des Elektrofahrzeugs auf der induktiven Ladestation bestimmt. Die Bestimmung erfolgt durch Vergleich der Positionsdaten der induktiven Ladestation mit einer durch die Navigationseinheit ermittelten aktuellen Position des Elektrofahrzeugs. Die Trajektorie zur Positionierung des Elektrofahrzeugs erfolgt zusätzlich durch Bestimmung einer Laufzeitdifferenz der Antwortnachricht zwischen der ersten Transpondereinheit und der zweiten Transpondereinheit, wobei in mindestens der zweiten Transpondereinheit wenigstens zwei in einem vorgegebenen Abstand angeordnete Transponder vorgesehen sind.

Die erfindungsgemäßen Mittel und das erfindungsgemäße Verfahren weisen den Vorteil auf, dass eine Bestimmung der Position bzw. Trajektorie des Elektrofahrzeugs eine exakte Positionierung des Elektrofahrzeugs auf der induktiven Ladestation ermöglichen, ohne hierzu eine besondere Geschicklichkeit des Fahrzeugführers oder eine Hinzuziehung von Bodenmarkierungen erforderlich zu machen.

Die Bestimmung der Trajektorie zur Positionierung des Elektrofahrzeugs auf der induktiven Ladestation erfolgt in vorteilhafter Weise durch eine Grobpositionierung durch Vergleich der Positionsdaten der induktiven Ladestation mit einer durch die Navigationseinheit, beispielsweise anhand von GPS-Daten (»Global Positioning System«) ermittelten aktuellen Position des Elektrofahrzeugs.

Die Erfindung sieht im Weiteren eine zusätzliche oder, in nicht beanspruchten Ausführungsformen, alternative Feinpositionierung durch Bestimmung einer Laufzeitdifferenz der Antwortnachricht vor. Eine ausschließliche, die Grobpositionierung ersetzende Feinpositionierung kommt insbesondere in den Fällen in Betracht, in denen ein GPS-Signal nicht empfangbar ist. Dies ist in üblichen Parkhäusern der Regelfall. Die Feinpositionierung erfolgt durch Bestimmung einer Laufzeitdifferenz der Antwortnachricht zwischen der ersten Transpondereinheit und der zweiten Transpondereinheit, wobei in mindestens der zweiten Transpondereinheit wenigstens zwei in einem vorgegebenen Abstand angeordnete Transponder vorgesehen sind. In einer nicht beanspruchten Ausgestaltungsvariante der Erfindung sind fahrzeugseitig oder, gemäß der Erfindung ladestationsseitig mindestens zwei zueinander beabstandete Transponder vorgesehen, um Laufzeitdifferenzen zu bestimmen.

Gemäß einer nicht beanspruchten Ausgestaltungsvariante ist für die erste Transpondereinheit des Elektrofahrzeugs vorgesehen, wenigstens zwei in einem vorgegebenen Abstand angeordnete Transponder vorzusehen.

Der vorgegebene Abstand ermöglicht in einfacher Weise, anhand eines Laufzeitunterschieds, unter Anwendung einer Triangulierung und/oder (Tri-) Lateration, die Positionsbestimmung vorzunehmen.

Gemäß einer Ausführungsform beinhaltet das Elektrofahrzeug ein Parkassistenzsystem zur Führung des Elektrofahrzeugs mit der bestimmten Trajektorie. Die Führung wird in einer einfachen Ausgestaltungsvariante vom Fahrzeugführer durchgeführt, wobei das Parkassistenzsystem durch entsprechende Anweisungen den Fahrer bei der Positionierung unterstützt. In einer bevorzugten Ausgestaltungsvariante ist das Parkassistenzsystem zur Ansteuerung eines Lenkaktuators mit der bestimmten Trajektorie eingerichtet. In dieser bevorzugten Ausgestaltungsvariante führt das Parkassistenzsystem die Positionierung des Elektrofahrzeugs also autonom durch.

In einer vorteilhaften Weiterbildung beinhaltet das Elektrofahrzeug eine Einrichtung zum Senden einer drahtlosen Reservierungsnachricht nach Empfang der Antwortnachricht. Diese vorteilhafte Maßnahme gestattet eine konfliktfreie Positionierung des Elektrofahrzeugs für den Fall, dass mehrere Fahrzeugführer eine derzeit freie Ladestation anzufahren wünschen.

Gemäß einer Ausführungsform der induktiven Ladestation ist dem entsprechend vorgesehen, dass die Antwortnachricht eine Information über den Belegtheitszustand der induktiven Ladestation enthält. Alternativ hierzu ist auch denkbar, dass eine Antwortnachricht durch eine belegte Ladestation auf eine Anfragenachricht des Elektrofahrzeugs unterbleibt.

Gemäß einer weiteren Ausführungsform beinhaltet die induktive Ladestation ein eindeutiges Identitätskennzeichen, etwas analog zu einer weltweit eindeutigen MAC-Adresse (Media Access Control), welche mit der Antwortnachricht an das Elektrofahrzeug übermittelt wird. Diese Maßnahme unterstützt in vorteilhafter Weise eine Unterscheidung einer Mehrzahl von Ladestationen, insbesondere in Fällen, in denen die bei Ladestationen, etwa in einer Parkreihenanordnung, eng benachbart sind.

Gemäß einer weiteren Ausführungsform beinhaltet die Antwortnachricht weiterhin Daten einer relativen Position der wenigstens zwei Transponder zur induktiven Ladestation.

In einer besonders bevorzugten Ausführungsform wird eine für Anfragenachrichten und Antwortnachrichten verwendete Übertragungsfrequenz in einem der Frequenzbänder gewählt, welche den an sich bekannten RFID Spezifikationen (»Radio-Frequency Identification«) entsprechen. Eine Verwendung der RFID Übertragung bietet den Vorteil einer ausgereiften, standardisierten, robusten und preiswerte Technologie. RFID ist in vorteilhafter Weise in vielen Ländern auf gleichen Frequenzbändern zertifiziert.

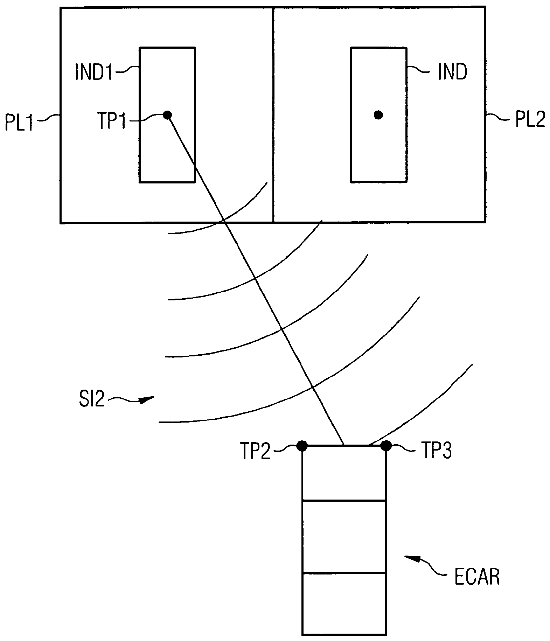

Im Folgenden werden Ausführungsbeispiele der Erfindung anhand der Zeichnung näher erläutert. Die Figur zeigt eine schematische Darstellung einer Kommunikation zwischen einem Elektrofahrzeug und einer induktiven Ladestation zur Positionierung eines Elektrofahrzeugs auf der induktiven Ladestation.

Die Figur zeigt eine erste und eine zweite Abstellfläche PL1, PL2 für Elektrofahrzeuge. Unterhalb der Bodenfläche jeder Abstellfläche PL1, PL2 ist dabei eine induktive Ladestation IND1, IND2 eingelassen.

Die im Folgenden betrachtete induktive Ladestation IND1 wird hauptsächlich von einer Induktivität gebildet, welcher ein - nicht dargestelltes - Steuerungssystem sowie - nicht dargestellte - Stromversorgungseinrichtungen, Stromrichter etc. zugeordnet ist. Der induktiven Ladestation IND1 ist weiterhin eine zweite Transpondereinheit, bestehend aus einem Transponder TP1 zugeordnet

Ein zur Positionierung auf einer induktiven Ladestation Elektrofahrzeug ECAR umfasst eine erste Transpondereinheit, bestehend aus zwei Transpondern TP2, TP3 zum Senden einer - nicht dargestellten - drahtlosen Anfragenachricht und zum Empfang einer die Anfragenachricht beantwortenden gesendeten drahtlosen Antwortnachricht SI2, welche durch die zweite Transpondereinheit der Ladestation gesendet wird.

Das Elektrofahrzeug verfügt weiterhin über eine - nicht dargestellte - Navigationseinheit, welche u.a. ein Lokalisierungssystem beinhaltet. Ein bekanntes Lokalisierungssystem ist in der Fachwelt unter dem Bezeichnung GPS (Global Positioning System) bekannt. Auf GPS basierende Lokalisierungssysteme beruhen auf einer Messung einer Zeitdifferenz in empfangenen Signalen, welche von mehreren Satelliten gesendet werden.

Zusätzlich verfügt das Elektrofahrzeug ECAR gemäß einer Ausgestaltungsvariante der Erfindung über Kartendaten, in der die Position von induktiven Ladestationen PL1, PL2 verzeichnet ist. Ist dies nicht der Fall, kann der Fahrzeugführer die Suche nach einer solchen induktiven Ladestation PL1, PL2 in unmittelbarer Nähe manuell auslösen

Die Anfragenachricht wird als ungerichteter elektromagnetischer Impuls über einen der beiden oder beide Transponder TP2, TP3 der ersten Transpondereinheit gesendet. Gemäß einer Ausgestaltungsvariante der Erfindung wird die Anfragenachricht auf einer für RFID Technologie (»Radio-Frequency Identification«) freigegebenen Frequenz gesendet. Je nach Ausgestaltung des Elektrofahrzeugs ECAR wird diese Anfragenachricht entweder automatisch durch das Navigationssystem ausgelöst oder durch eine entsprechende Eingabe oder Befehl des Fahrzeugführers.

Nach dem Empfang der Anfragenachricht durch eine induktive Ladestation IND1, IND2 ist vorgesehen, dass alle - oder alle derzeit nicht belegten - Ladestationen IND1, IND2 eine Antwortnachricht SI2 senden.

Die Antwortnachricht SI2 enthält beispielsweise Positionsdaten und eine eindeutige Identifizierung der induktiven Ladestation IND1.

Die Antwortnachricht SI2 wird durch die erste Transpondereinheit des Elektrofahrzeugs ECAR empfangen und die darin enthaltenen geographischen Positionsdaten an das dem Elektrofahrzeug zugeordnete Navigationseinheit übergeben. Die von der Navigationseinheit bestimmte Position der induktiven Ladestation IND1 kann dem Fahrzeugführer durch das Navigationssystem dargestellt werden.

Gemäß einer Ausgestaltungsvariante ist vorgesehen, dass der Fahrzeugführer zusätzlich die Möglichkeit hat, die induktiven Ladestation IND1 für einen zu definierenden Zeitraum zu reservieren.

Zusätzlich wird einer Laufzeitdifferenz der Antwortnachricht bestimmt, welche gemäß einer nicht beanspruchten Ausgestaltungsvariante der Erfindung am Elektrofahrzeug an den beiden räumlich getrennten Transpondern TP2, TP3 gemessen wird. Die Transponder TP2, TP3 sind in einem vorgegebenen Abstand räumlich getrennt, welcher gegebenenfalls auf die verwendete Wellenlänge ausgetauschter Nachrichten optimierbar ist.

Beispielsweise kann die Laufzeitmessung bei Erkennung einer Pulsflanke der Antwortnachricht SI2 an einem ersten Transponder TP2 gestartet werden und bei Erkennung der gleichen Pulsflanke der Antwortnachricht SI2 an einem zweiten Transponder TP3 als Differenz der Ankunft der beiden Pulsflanken am jeweiligen Transponder TP2, TP3 bestimmt werden.

Anhand der Laufzeitdifferenz wird eine Bestimmung der genauen Position des ersten Transponders TP1 durch Triangulierung und/oder (Tri-) Lateration durchgeführt. Mit der Positionsbestimmung des ersten Transponders TP1 ist gemäß der in der Zeichnung dargestellten Anordnung auch die geometrische Mitte der Ladestation IND1 bekannt. Sollte der erste Transponder TP1 dagegen dezentral angeordnet sein, ist gemäß einer weiteren Ausführungsform vorgesehen, dass die Antwortnachricht weiterhin Daten einer relativen Position des Transponders TP1 zur induktiven Ladestation IND1 beinhaltet. Dies gilt auch für den Fall, in dem die Ladestation IND1 eine Mehrzahl von räumlich voneinander getrennten Transpondern aufweist.

Die Priorität der Positionsbestimmung anhand der Laufzeitdifferenz einer empfangenen Antwortnachricht nimmt mit fortschreitender Annäherung an den ersten Transponder TP1 gegenüber der Positionsbestimmung unter Verwendung der in der Antwortnachricht SI2 enthaltenen Positionsdaten zu. Die Positionsbestimmung anhand der Laufzeitdifferenz wird daher zur Feinpositionierung, die Positionsbestimmung unter Verwendung der in der Antwortnachricht SI2 enthaltenen Positionsdaten dagegen zur Grobpositionierung verwendet. Die Positionsbestimmung anhand der Laufzeitdifferenz wird mehrmals unter Verwendung wiederholt gesendeter Antwortnachrichten durchgeführt. Die aus der Laufzeitdifferenz ermittelte Position wird im Elektrofahrzeug ECAR, z.B. durch die Navigationseinheit, bestimmt.

Eine im Elektrofahrzeug ECAR angeordnete - nicht dargestellte - Bestimmungseinheit dient einer Bestimmung einer Trajektorie, welche für eine Positionierung des Elektrofahrzeugs ECAR auf der induktiven Ladestation IND1 bestimmt wird.

Im Elektrofahrzeug ECAR ist gemäß einer Ausgestaltungsvariante der Erfindung ein - nicht dargestelltes - Parkassistenzsystem angeordnet, welches durch optische und/oder akustische Signale dem Fahrzeugführer auf dieser Trajektorie führt. Alternativ verfügt das Elektrofahrzeug ECAR über ein Parkassistenzsystem, welches zur Ansteuerung eines Lenkaktuators zur Ansteuerung der erfindungsgemäß bestimmenden Position eingerichtet ist.

Gemäß einer Alternative der Erfindung wird die Antwortnachricht SI2 von den wenigstens zwei in einem vorgegebenen Abstand angeordneten Transpondern gleichzeitig abgestrahlt, wodurch im Elektrofahrzeug ECAR lediglich ein Transponder zur Bestimmung der Laufzeitdifferenz erforderlich ist.

Die Transponder TP1, TP2, TP3 sind vorzugweise als RFID-Transponder ausgestaltet. Passive RFID-Transponder benötigen keine eigene Versorgung mit elektrischer Energie, da sie die für die Signalbearbeitung und -rücksendung erforderliche Energie aus den empfangenen Funksignalen beziehen. Aktive RFID-Transponder nutzen eine externe Energiequelle für die Signalbearbeitung und -rücksendung. Die Reichweite kann - je nach zulässiger Sendeleistung - Kilometer betragen.

Durch die funktechnische Gestaltung der Erfindung kann in vorteilhafter Weise auf kostenintensive und störanfälligere optische Systeme im Elektrofahrzeug ECAR verzichtet werden.

Die Erfindung weist weiterhin den Vorteil auf, dass die funktechnischen Komponenten, insbesondere Transponder TP1, fester Bestandteil der induktiven Sendeeinheit werden kann und unproblematisch während des Fertigungsprozesses eingebracht werden kann. Außer einer Einbringung der induktiven Sendeeinheit in den Boden und den Anschluss an das Stromnetz müssen keine sonstigen baulichen Veränderungen vorgenommen werden.

Die Erfindung weist weiterhin den Vorteil auf, dass die fahrzeugseitigen Transponder TP2, TP3 sowie die Auswertungslogik für die RFID Signale direkt im Transponder TP2, TP3 untergebracht werden können. Dies reduziert den Integrationsaufwand auf ein Minimum.

Des Weiteren kann die im Elektrofahrzeug ECAR bereits vorhandene Navigationseinheit ohne Anpassungen verwendet werden. Dies gilt im Besonderen, wenn z.B. in einem Parkhaus oder bei sonstiger Abschattung der GPS Antenne nur unzureichende Satellitensignale empfangbar sind. In diesem Fall ist immer noch die oben beschriebene Feinpositionierung anwendbar, um die eine induktive Ladestation IND1 mit dem Elektrofahrzeug ECAR ansteuern zu können.

## Patentansprüche

1. Elektrofahrzeug, eingerichtet zur Positionierung auf einer induktiven Ladestation, umfassend;
- eine erste Transpondereinheit zum Senden einer drahtlosen Anfragenachricht und zum Empfang einer die Anfragenachricht beantwortenden durch eine der induktiven Ladestation (IND1) zugeordneten zweite Transpondereinheit gesendeten drahtlosen Antwortnachricht (SI2);
- eine Navigationseinheit zur Übernahme von in der Antwortnachricht (SI2) enthaltenen Positionsdaten der induktiven Ladestation (IND1);
- eine Bestimmungseinheit zur Bestimmung einer Trajektorie zur Positionierung des Elektrofahrzeugs (ECAR) auf der induktiven Ladestation (IND1)
- durch Vergleich der Positionsdaten der induktiven Ladestation (IND1) mit einer durch die Navigationseinheit ermittelten aktuellen Position des Elektrofahrzeugs (ECAR); und;
- durch Ermittlung einer Laufzeitdifferenz der Antwortnachricht (SI2) zwischen der ersten Transpondereinheit und zwei in einem vorgegebenen Abstand angeordneten Transpondern der zweiten Transpondereinheit.

2. Elektrofahrzeug nach Anspruch 1, **gekennzeichnet durch** ein Parkassistenzsystem welches zur Ansteuerung eines Lenkaktuators mit der bestimmten Trajektorie eingerichtet ist.

3. Elektrofahrzeug nach einem der vorgenannten Ansprüche, bei der die Bestimmungseinheit zur Durchführung einer Triangulation oder und/oder Lateration zur Bestimmung der Trajektorie anhand der ermittelten Laufzeitdifferenzen eingerichtet ist.

4. Elektrofahrzeug nach einem der vorgenannten Ansprüche, die erste Transpondereinheit eingerichtet zum Senden einer drahtlosen Reservierungsnachricht nach Empfang der Antwortnachricht (SI2).

5. Induktive Ladestation, eingerichtet zur Positionierung eines Elektrofahrzeugs (ECAR), umfassend;
- eine zweite Transpondereinheit zum Empfang einer drahtlosen Anfragenachricht und zum mindestens einmaligen Senden einer die Anfragenachricht beantwortenden Antwortnachricht (SI2) an eine dem Elektrofahrzeug (ECAR) zugeordnete erste Transpondereinheit,
- eine Steuereinheit zur Erstellung der Antwortnachricht (SI2), die Antwortnachricht (SI2) umfassend Positionsdaten der induktiven Ladestation (IND1);
wobei zur Bestimmung einer Laufzeitdifferenzen der Antwortnachricht (SI2) zwischen der zweiten Transpondereinheit und der ersten Transpondereinheit in der zweiten Transpondereinheit wenigstens zwei in einem vorgegebenen Abstand angeordnete Transponder vorgesehen sind.

6. Induktive Ladestation nach Anspruch 5, **dadurch gekennzeichnet, dass** die Antwortnachricht (SI2) eine Information über den Belegtheitszustand der induktiven Ladestation (IND1) enthält.

7. Induktive Ladestation nach einem der vorgenannten Ansprüche 5 und 6, **dadurch gekennzeichnet, dass** die Antwortnachricht (SI2) weiterhin ein eindeutiges Identitätskennzeichen der induktiven Ladestation (IND1) enthält.

8. Induktive Ladestation nach einem der vorgenannten Ansprüche 5 bis 7, **dadurch gekennzeichnet, dass** die Antwortnachricht (SI2) weiterhin Daten einer relativen Position der wenigstens zwei Transponder zur induktiven Ladestation (IND1) enthält.

9. Induktive Ladestation nach einem der vorgenannten Ansprüche 5 bis 8, **gekennzeichnet durch** eine Übertragungsfrequenz für Anfragenachricht und Antwortnachricht (SI2), welche in einem der Frequenzbänder der an sich bekannten RFID Spezifikationen liegt.

10. Verfahren zur Positionierung eines Elektrofahrzeugs auf einer induktiven Ladestation, umfassend folgende Schritte:
- Senden einer drahtlosen Anfragenachricht durch eine dem Elektrofahrzeug (ECAR) zugeordnete erste Transpondereinheit;
- Empfang der Anfragenachricht durch eine der induktiven Ladestation (IND1) zugeordnete zweite Transpondereinheit;
- Erstellung einer die Anfragenachricht beantwortenden drahtlosen Antwortnachricht (SI2) durch eine der induktiven Ladestation (IND1) zugeordnete Steuereinheit, die Antwortnachricht (SI2) umfassend Positionsdaten der induktiven Ladestation (IND1);
- Mindestens einmaliges Senden der Antwortnachricht (SI2) durch die zweite Transpondereinheit;
- Empfang der Antwortnachricht (SI2) durch die erste Transpondereinheit und Übergabe der darin enthaltenen Positionsdaten an eine dem Elektrofahrzeug (ECAR) zugeordnete Navigationseinheit;
- Bestimmung einer Trajektorie zur Positionierung des Elektrofahrzeugs (ECAR) auf der induktiven Ladestation (IND1)
- durch Vergleich der Positionsdaten der induktiven Ladestation (IND1) mit einer durch die Navigationseinheit ermittelten aktuellen Position des Elektrofahrzeugs (ECAR); und;
- durch Bestimmung einer Laufzeitdifferenz der Antwortnachricht (SI2) zwischen der ersten Transpondereinheit und der zweiten Transpondereinheit, wobei in mindestens der zweiten Transpondereinheit wenigstens zwei in einem vorgegebenen Abstand angeordnete Transponder vorgesehen sind.

## Claims

1. Electric vehicle configured to be positioned on an inductive charging station, comprising:
- a first transponder unit for transmitting a wireless request message and for receiving a wireless response message (SI2) which responds to the request message and is transmitted by a second transponder unit assigned to the inductive charging station (IND1);
- a navigation unit for accepting position data relating to the inductive charging station (IND1) which are contained in the response message (SI2);
- a determination unit for determining a trajectory for positioning the electric vehicle (ECAR) on the inductive charging station (IND1)
- by comparing the position data relating to the inductive charging station (IND1) with a current position of the electric vehicle (ECAR) determined by the navigation unit; and
- by determining a propagation time difference of the response message (SI2) between the first transponder unit and two transponders of the second transponder unit which are arranged at a predefined distance.

2. Electric vehicle according to Claim 1, **characterized by** a parking assistance system which is configured to control a steering actuator with the determined trajectory.

3. Electric vehicle according to one of the above-mentioned claims, in which the determination unit is configured to carry out a triangulation and/or trilateration for the purpose of determining the trajectory on the basis of the determined propagation time differences.

4. Electric vehicle according to one of the above-mentioned claims, in which the first transponder unit is configured to transmit a wireless reservation message after receiving the response message (SI2).

5. Inductive charging station configured to position an electric vehicle (ECAR), comprising:
- a second transponder unit for receiving a wireless request message and for transmitting, at least once, a response message (SI2) responding to the request message to a first transponder unit assigned to the electric vehicle (ECAR),
- a control unit for creating the response message (SI2), the response message (SI2) comprising position data relating to the inductive charging station (IND1);
wherein, in order to determine a propagation time difference of the response message (SI2) between the second transponder unit and the first transponder unit, at least two transponders arranged at a predefined distance are provided in the second transponder unit.

6. Inductive charging station according to Claim 5, **characterized in that** the response message (SI2) contains an item of information relating to the occupancy state of the inductive charging station (IND1).

7. Inductive charging station according to one of the above-mentioned Claims 5 and 6, **characterized in that** the response message (SI2) also contains a unique identification mark of the inductive charging station (IND1).

8. Inductive charging station according to one of the above-mentioned Claims 5 to 7, **characterized in that** the response message (SI2) also contains data relating to a relative position between the at least two transponders and the inductive charging station (IND1).

9. Inductive charging station according to one of the above-mentioned Claims 5 to 8, **characterized by** a transmission frequency for the request message and the response message (SI2) which is in one of the frequency bands of the RFID specifications which are known per se.

10. Method for positioning an electric vehicle on an inductive charging station, comprising the following steps:
- transmission of a wireless request message by a first transponder unit assigned to the electric vehicle (ECAR);
- reception of the request message by a second transponder unit assigned to the inductive charging station (IND1);
- creation of a wireless response message (SI2) responding to the request message by a control unit assigned to the inductive charging station (IND1), the response message (SI2) comprising position data relating to the inductive charging station (IND1);
- transmission, at least once, of the response message (SI2) by the second transponder unit;
- reception of the response message (SI2) by the first transponder unit and transfer of the position data contained therein to a navigation unit assigned to the electric vehicle (ECAR) ;
- determination of a trajectory for positioning the electric vehicle (ECAR) on the inductive charging station (IND1)
- by comparing the position data relating to the inductive charging station (IND1) with a current position of the electric vehicle (ECAR) determined by the navigation unit; and
- by determining a propagation time difference of the response message (SI2) between the first transponder unit and the second transponder unit, wherein at least two transponders arranged at a predefined distance are provided in at least the second transponder unit.

## Revendications

1. Véhicule électrique configuré pour positionnement sur une station de chargement inductive, comprenant :
- une première unité de transpondeur pour émettre un message de requête sans fil et pour recevoir un message de réponse sans fil (SI2) envoyé par une deuxième unité de transpondeur associée à la station de chargement inductive (IND1) en réponse au message de requête ;
- une unité de navigation pour reprendre des données de position de la station de chargement inductive (IND1) contenues dans le message de réponse (SI2) ;
- une unité de détermination pour déterminer une trajectoire pour le positionnement du véhicule électrique (ECAR) sur la station de chargement inductive (IND1)
- par comparaison des données de position de la station de chargement inductive (IND1) avec une position actuelle du véhicule électriques (ECAR) déterminée par l'unité de navigation et
- par détermination d'une différence de temps de propagation du message de réponse (SI2) entre la première unité de transpondeur et deux transpondeurs de la deuxième unité de transpondeur agencés à une distance donnée.

2. Véhicule électrique selon la revendication 1, **caractérisé par** un système d'aide au stationnement qui est configuré pour commander un actionneur de direction avec la trajectoire déterminée.

3. Véhicule électrique selon l'une des revendications précédentes, dans lequel l'unité de détermination est configurée pour effectuer une triangulation ou et/ou une latération pour déterminer la trajectoire à l'aide de la différence de temps de propagation déterminée.

4. Véhicule électrique selon l'une des revendications précédentes, la première unité de transpondeur étant configurée pour émettre un message de réservation sans fil après la réception du message de réponse (SI2).

5. Station de chargement inductive, configurée pour positionner un véhicule électrique (ECAR), comprenant :
- une deuxième unité de transpondeur pour recevoir un message de requête sans fil et pour envoyer au moins une fois un message de réponse (SI2) répondant au message de requête à une première unité de transpondeur associée au véhicule électrique (ECAR),
- une unité de commande pour créer le message de réponse (SI2), le message de réponse (SI2) comprenant des données de position de la station de chargement inductive (IND1);
au moins deux transpondeurs agencés à une distance donnée étant prévus dans la deuxième unité de transpondeur pour déterminer une différence de temps de propagation du message de réponse (SI2) entre la deuxième unité de transpondeur et la première unité de transpondeur.

6. Station de chargement inductive selon la revendication 5, **caractérisée en ce que** le message de réponse (SI2) contient une information sur l'état d'occupation de la station de chargement inductive (IND1).

7. Station de chargement inductive selon l'une des revendications précédentes 5 et 6, **caractérisée en ce que** le message de réponse (SI2) contient en outre une marque d'identification univoque de la station de chargement inductive (IND1).

8. Station de chargement inductive selon l'une des revendications précédentes 5 à 7, **caractérisée en ce que** le message de réponse (SI2) contient en outre des données d'une position relative des au moins deux transpondeurs par rapport à la station de chargement inductive (IND1).

9. Station de chargement inductive selon l'une des revendications précédentes 5 à 8, **caractérisée par** une fréquence de transmission pour message de requête et message de réponse (SI2), laquelle se trouve dans l'une des bandes de fréquences des spécifications RFID en soi connues.

10. Procédé de positionnement d'un véhicule électrique sur une station de chargement inductive, comprenant les étapes suivantes :
- émission d'un message de requête sans fil par une première unité de transpondeur associée au véhicule électrique (ECAR) ;
- réception du message de requête par une deuxième unité de transpondeur associée à la station de chargement inductive (IND1) ;
- création d'un message de réponse sans fil (SI2) répondant au message de requête par une unité de commande associée à la station de chargement inductive (IND1), le message de réponse (SI2) comprenant des données de position de la station de chargement inductive (IND1) ;
- émission, au moins une fois, du message de réponse (SI2) par la deuxième unité de transpondeur ;
- réception du message de réponse (SI2) par la première unité de transpondeur et remise des données de position qu'il contient à une unité de navigation associée au véhicule électrique (ECAR) ;
- détermination d'une trajectoire pour le positionnement du véhicule électrique (ECAR) sur la station de chargement inductive (IND1)
- par comparaison des données de position de la station de chargement inductive (IND1) avec une position actuelle du véhicule électrique (ECAR) déterminée par l'unité de navigation et
- par détermination d'une différence de temps de propagation du message de réponse (SI2) entre la première unité de transpondeur et la deuxième unité de transpondeur, au moins dans la deuxième unité de transpondeur étant prévus au moins deux transpondeurs de la deuxième unité de transpondeur agencés à une distance donnée.
